# EUROPÄISCHE PATENTSCHRIFT

(11) **EP 1 201 494 B1**
(45) Veröffentlichungstag und Bekanntmachung des Hinweises auf die Patenterteilung: **09.01.2008**
(21) Anmeldenummer: 01124815.0
(22) Anmeldetag: 18.10.2001
(51) Int. Cl.: B60N 3/02

(54) **Anordnung zur verdrehsicheren Lagerung von Haltestangen**
Device for securely restraining a hand rail in a rotational sense
Dispositif de fixation permettant de bloquer une main courante en rotation

(30) Priorität: 20.10.2000 DE 10051967
(43) Veröffentlichungstag der Anmeldung: 02.05.2002
(73) Patentinhaber: ALSTOM LHB GmbH, 38239 Salzgitter (DE)
(72) Erfinder: Kleinöder, Helmuth, Dipl.-Ing., 34132 Kassel (DE); Maass, Harald, 38226 Salzgitter (DE)

(56) Entgegenhaltungen:
- EP-A- 0 688 919
- EP-A- 0 769 415

## Beschreibung

Die Erfindung betrifft eine Anordnung zur verdrehsicheren Lagerung von Haltestangen in öffentlichen Verkehrsmitteln für die unfallfreie Beförderung von stehenden Fahrgästen.

Gemäß dem bekannten Stand der Technik sind Haltestangen bekannt, die in Fahrzeugen, insbesondere in Bussen oder Bahnen zum Einsatz gelangen. Diese Haltestangen erstrecken sich senkrecht zwischen Fußboden und Decke des Fahrzeuginneren und sind im Fußbodenbereich einerseits und im Deckenbereich andererseits befestigt.

In der deutschen Patentschrift DE 29 00 056 C3 ist eine Anordnung zum Befestigen einer Haltestange, insbesondere bei Fahrzeugen zur Personenbeförderung beschrieben, bei der die Haltestange an ihrem unteren Ende mit einer Grundplatte verschweißt ist, die mit dem Fußboden des Fahrzeuges verschraubt ist. In einer weiteren Ausführung dieser Erfindung ist die Haltestange durch eine zweiteilige Schraubverbindung gegen Verdrehung gesichert.

Der Nachteil dieser Haltestangenbefestigung liegt im wesentlichen in seiner gestalterischen Unzulänglichkeit, die im vorgesehenen Anwendungsbereich wenig gefällige optische Wirkung beim Betrachter erzeugt. Darüber hinaus wirkt sich eine im Deckenbereich fehlende, verdrehsichere Lagerung nachteilig auf die Sicherheit der Haltestange, insbesondere bei gebogener Ausführung aus.

In einer weiteren Veröffentlichung, dem deutschen Gebrauchsmuster DE 299 13 289 U1, wird ein Haltestangensystem für öffentliche Verkehrsmittel beschrieben, bei dem als Grundelement Strangpreßprofile aus Aluminium eingesetzt sind.

Die Verbindung des Strangpreßprofils mit Podesten, Böden, Wänden und/oder Decken des jeweiligen Verkehrsmittels erfolgt kraftschlüssig, wobei die Enden des Strangpreßprofils in Adaptern oder Manschetten, die mit den Anschlußflächen fest verbunden sind, gesteckt und in diesen verklebt, verschraubt oder verschweißt werden.

Dieses Haltestangensystem weist den Nachteil auf, daß vertikal verlaufende Strangpreßprofile sowohl im Deckenbereich als auch im Bodenbereich kraftschlüssig befestigt werden und somit ein Längenausgleich, der infolge der Fahrzeugschwingungen notwendig ist, nicht gegeben ist. Es kommt im Haltestangensystem zu wechselnden Spannungen, die sich auf die Lebensdauer des Systems nachteilig auswirken können.

Aus der EP-A-0 769 415 ist eine Haltevorrichtung für Fahrgäste in einem Fahrzeug, insbesondere zur Verwendung in einem Bus bekannt, bei der im Einbau- bzw. Betriebszustand die Haltestange an beiden Enden drehfest und sowohl in Längs- als auch Vertikalrichtung verschiebefest mit dem Fahrzeug im Boden- bzw. Deckenbereich verbunden sind. Im Deckenbereich ist ein Träger etwa parallel in einem Abstand zur Decke angeordnet. Der Träger ist als Profilschiene ausgebildet, welche wenigstens an der der Decke abgewandten Seite eine T-förmige Nut aufweist, in die ein Gleitstück eingelegt ist, an welchem eine Haltestange befestigbar ist. Zur Fixierung der Haltestange gegen Längsverschiebungen ist das Gleitstück mit Haltestange in der Nut in der gewünschten Montageposition arretierbar. Das untere Ende der Haltestange ist mittels eines Bodenlagers am Fahrzeugboden dreh- und verschiebefest fixiert. Insbesondere da beide Enden der Haltestange in vertikaler Richtung nach dem Einbau fest fixiert sind, gibt dieses Dokument keine Anregungen wie durch Fahrzeugschwingungen bedingte Abstandsönderungen zwischen Decke und Fußboden bei der Haltevorrichtung zu berücksichtigen wären um Zwänge und Spannungen zu vermeiden, damit nachteilige Auswirkungen auf das Haltestangensystem und benachbarte Baugruppen vermieden werden können.

Aufgabe der Erfindung ist es, ein Haltestangensystem, das gebogene Haltestangen einschließt, bereitzustellen, das verdrehsicher angeordnet ist und eine durch Fahrzeugschwingungen bedingte Abstandsänderung zwischen Deckenbereich und Bodenbereich ausgleicht.

Diese Aufgabe wird dadurch gelöst, daß ein Ende der Haltestange entweder im Deckenbereich oder im Bodenbereich des Verkehrsmittels in einem formschlüssigen Schiebesitz gemäß Anspruch 1 geführt wird. Weitere vorteilhafte Ausgestaltungen der Erfindung sind in den abhängigen Unteransprüchen aufgeführt.

Die Erfindung wird nachstehend anhand mehrerer Ausführungsbeispiele näher beschrieben. Die zugehörigen Zeichnungen zeigen in
- Fig. 1: eine Seitenansicht einer zwischen dem Deckenbereich und dem Bodenbereich eines Verkehrsmittels angeordneten, gebogenen Haltestange;
- Fig. 2a: einen Längsschnitt durch einen im Deckenbereich angeordneten Schiebesitz mit einem Formschluß, der den Querschnitt eines Polygons aufweist;
- Fig. 2b: einen Querschnitt gemäß Linie A-A in Fig. 2a;
- Fig. 3: einen Querschnitt durch einen im Deckenbereich angeordneten Schiebesitz mit einem Formschluß, der den Querschnitt eines Rechtecks aufweist;
- Fig. 4: einen Querschnitt durch einen im Deckenbereich angeordneten Schiebesitz mit einem Formschluß, der den Querschnitt eines Sechsecks aufweist und
- Fig. 5: einen Querschnitt durch einen im Deckenbereich angeordneten Schiebesitz mit einem Formschluß, der den Querschnitt eines Kreises mit seitlichen Abflachungen bzw. Ausnehmungen aufweist.

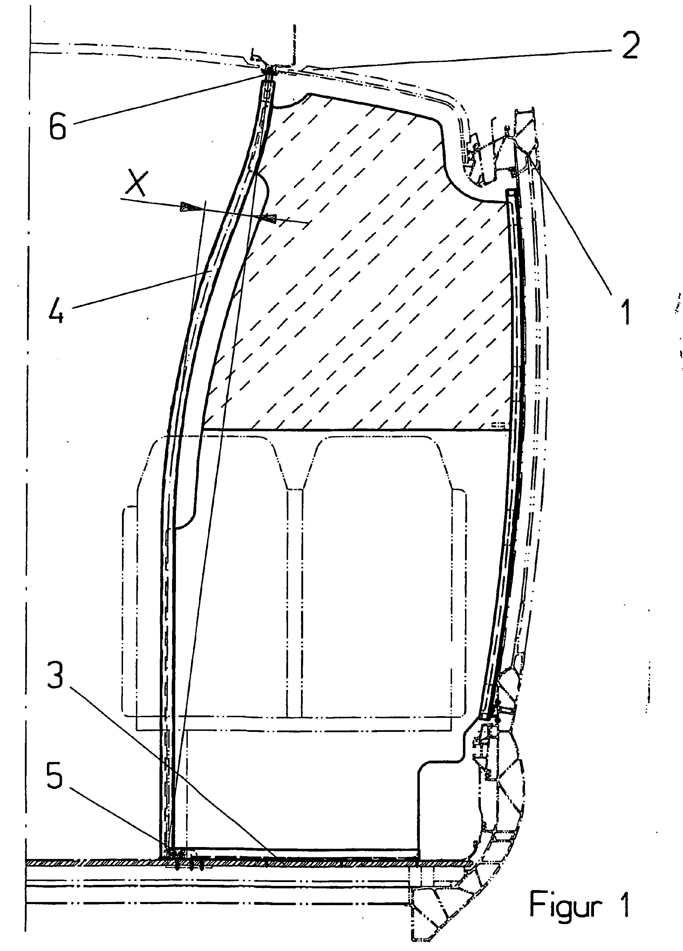

Fig. 1 zeigt einen Teil des Innenraumes eines Straßenbahnwagens 1 im Querschnitt. Zwischen der Decke 2 und dem Fußboden 3 ist eine Haltestange 4 angeordnet, die der Standsicherung des stehenden Fahrgastes im fahrenden Verkehrsmittel dienen soll. Die Ausbildung des Querschnittes des Straßenbahnwagens 1 und dessen Ausstattung mit Steh- und Sitzplätzen erfordert eine gebogene Form der Haltestange 4. Da in dieser Ausführung die Vertikalachsen des Bodenlagers 5 und des Deckenlagers 6 nicht fluchtend verlaufen, tritt beim Aufbringen der Haltekraft durch den Fahrgast in den Lagern 5, 6 ein Moment, ein sogenannter "Kurbeleffekt" auf, der unerwünscht ist. Dieser nachteiligen Wirkung wird durch eine verdrehfeste Verbindung zwischen der Haltestange 4 einerseits und den Lagern 5, 6 andererseits begegnet.

Im Zustand der Fahrt unterliegt der Straßenbahnwagen 1 Erschütterungen und Schwingungen, die dazu führen, daß sich innerhalb der in Grenzen labilen Fahrgastzelle der Abstand zwischen dem Fußboden 3 und der Decke 2 des Straßenbahnwagens 1 verändert. Bei einer festen Einspannung der Haltestange 1 in den Lagern 5, 6 würden diese Schwingungen zu einer unerwünschten Belastung der Haltestange 1 führen. Dieser nachteiligen Wirkung wird dadurch begegnet, daß die deckenseitige Anbindung der Haltestange 1 verdrehsicher und zum Längenausgleich gleichzeitig verschiebbar ausgebildet ist.

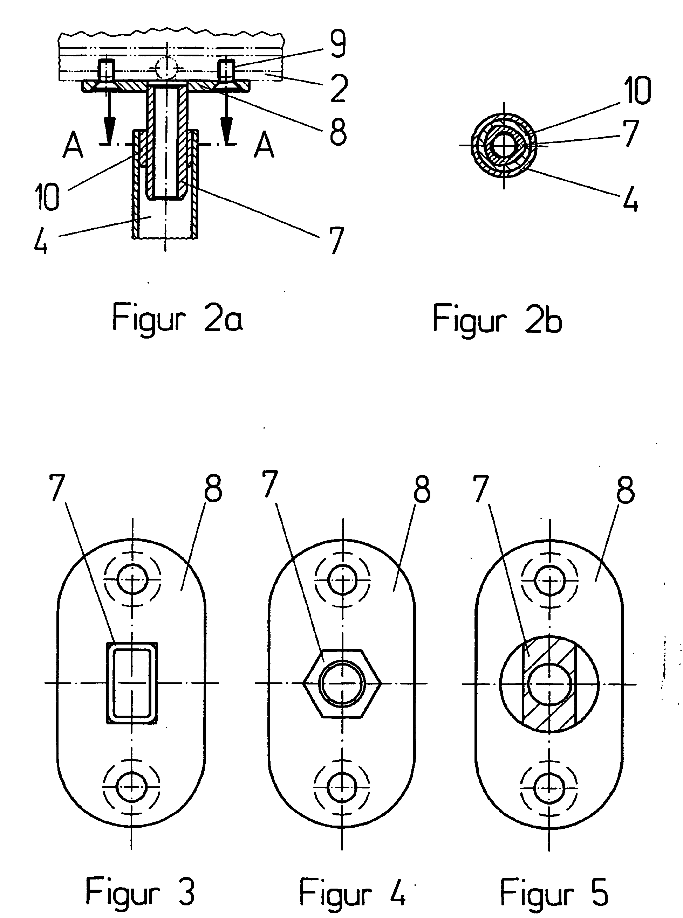

Wie in Fig. 2 a und 2 b zu sehen ist, besteht das Deckenlager 6 aus einem Stutzen 7, der über einen mit dem Stutzen 7 verschweißten Flansch 8 mittels Schrauben 9 an der Decke 2 befestigt ist. Der Stutzen 7 weist einen Profilquerschnitt auf, der einem Polygon entspricht und nimmt das obere Ende der Haltestange 4 auf. Dazu ist in das Innere der Haltestange 4 eine Profilnabe 10 verdrehfest eingesetzt, wobei die Verdrehfestigkeit zwischen beiden Bauteilen durch einen Keil oder eine Verklebung gewährleistet wird.

Die innere Bohrung der Profilnabe 10 entspricht dem Profilquerschnitt des Stutzens 7, wobei zwischen beiden Bauteilen eine Toleranz besteht, die eine leichtes Verschieben der Profilnabe 10 auf dem festgesetzten Stutzen 7 zuläßt. Die Profilnabe 10 besteht vorzugsweise aus Bronze, womit ein weitgehend wartungsfreies Gleiten der Bauteile gegeneinander unterstützt wird.

Die derartige Ausbildung der deckenseitigen Anbindung der Haltestange 4 gewährleistet die Verdrehfestigkeit der Haltestange 4 bei gleichzeitigem spannungsfreien Höhenausgleich zwischen der Decke 2 und dem Fußboden 3.

Die folgenden Ausführungsformen unterscheiden sich im wesentlichen durch das Querschnittsprofil des jeweiligen nut-federartig beschriebenen Schiebesitzes.

In Fig. 3 weist der Schiebesitz den Querschnitt eines Rechtecks auf.

Fig. 4 stellt einen Schiebesitz mit einem Formschluß dar, der den Querschnitt eines Sechsecks aufweist.

Fig. 5 zeigt einen Schiebesitz mit Formschluß, der den Querschnitt eines Kreises mit mindestens einer vorzugsweise mit zwei seitlichen Abflachungen bzw. Ausnehmungen aufweist. Die durch die Abflachungen bzw. Ausnehmungen gebildeten geraden Flanken der Profilwelle 7 und der querschnittsgleich ausgebildeten Profilnabe 10 sind wirtschaftlich aus einem kreisförmigen Grundkörper herstellbar.

Das beschriebene Ausführungsbeispiel bezieht sich auf die Ausführung der dekkenseitigen Anbindung der Haltestange 4. Es ist in gleicher Weise möglich, den Schiebesitz im Bodenbereich auszuführen. Dem Nachteil der Verschmutzung des Schiebesitzes und einer damit einhergehenden Gefahr des Klemmens der Verbindung kann nur durch zusätzlichen technischen und kostenmäßigen Aufwand für den Schutz des Schiebesitzes begegnet werden.

Neben den genannten Profilquerschnitten ist auch der Einsatz weiterer Querschnittsformen denkbar, sofern sie die notwendige Doppelfunktion der Lagerung der Haltestange 4 sichern, nämlich eine verdrehfeste Verschiebung der Profilwelle und der Profilnabe zu ermöglichen.

### Bezugszeichenliste

- 1: Straßenbahnwagen
- 2: Decke
- 3: Fußboden
- 4: Haltestange
- 5: Bodenlager
- 6: Deckenlager
- 7: Stutzen
- 8: Flansch
- 9: Schraube
- 10: Profilnabe

## Patentansprüche

1. Anordnung zur verdrehsicheren Lagerung von Haltestangen eines Haltestangensystems in öffentlichen Verkehrsmitteln, wobei die Haltestange (4) an ihrem unteren Ende mit einem Bodenlager (5) oder an ihrem oberen Ende mit einem Deckenlager (6) verdrehfest fixiert ist, **dadurch gekennzeichnet, dass** die Haltestange (4) bei Ausbildung mit einem drehfesten Bodenlager (5) an ihrem oberen Ende in einem im Deckenbereich angeordneten, mit einem formschlüssigen Schiebesitz ausgestatteten Deckenlager (6) oder bei Ausbildung mit einem drehfesten Deckenlager (6) in einem im Bodenbereich angeordneten, mit einem formschlüssigen Schiebesitz ausgestatteten Bodenlager (5) drehfest und vertikal führbar gehalten ist.

2. Anordnung nach Anspruch 1 **dadurch gekennzeichnet, dass** der im Deckenlager (6) oder Bodenlager (5) angeordnete Schiebesitz als Stutzen einer Profilwelle (7) ausgebildet ist, die mit einer entsprechend querschnittsgleich ausgebildeten, im oberen oder unterem Ende der Haltestange (4) verdrehfest eingesetzten Profilnabe (10) korrespondiert.

3. Anordnung nach Anspruch 1, **dadurch gekennzeichnet, dass** der im Deckenlager (6) oder Bodenlager (5) angeordnete Schiebesitz als Profilnabe (10) ausgebildet ist, die mit einem entsprechend als Profilwelle (7) querschnittsgleich ausgebildeten, oberen oder unterem Ende der Haltestange (4) korrespondiert.

4. Anordnung nach einem der Ansprüche 1 bis 3, **dadurch gekennzeichnet, dass** Profilwelle (7) und Profilnabe (10) den Querschnitt eines Polygons aufweisen.

5. Anordnung nach einem der Ansprüche 1 bis 3, **dadurch gekennzeichnet, dass** Profilwelle (7) und Profilnabe (10) den Querschnitt eines Rechtecks aufweisen.

6. Anordnung nach einem der Ansprüche 1 bis 3, **dadurch gekennzeichnet, dass** Profilwelle (7) und Profilnabe (10) den Querschnitt eines Sechsecks aufweisen.

7. Anordnung nach einem der Ansprüche 1 bis 3, **dadurch gekennzeichnet, dass** Profilwelle (7) und Profilnabe (10) den Querschnitt eines Kreises mit mindestens einer seitlichen Abflachung bzw. Ausnehmung aufweisen.

## Claims

1. Arrangement for the rotationally fixed mounting of holding rods of a holding rod system in public transport, the holding rod (4) being secured in a rotationally fixed manner at its lower end with a floor bearing (5) or at its upper end with a ceiling bearing (6), **characterised in that** the holding rod (4) is held in a rotationally fixed manner and so as to be vertically guidable, in a configuration with a rotationally fixed floor bearing (5), at its upper end in a ceiling bearing (6) arranged in the ceiling region and equipped with a positive sliding seat, or, in a configuration with a rotationally fixed ceiling bearing (6), in a floor bearing (5) arranged in the floor region and equipped with a positive sliding seat.

2. Arrangement according to claim 1, **characterised in that** the sliding seat arranged in the ceiling bearing (6) or floor bearing (5) is configured as the connecting piece of a profiled shaft (7), which corresponds with a profiled hub (10) configured so as to be correspondingly cross sectionally identical and inserted so as to be rotationally fixed in the upper or lower end of the holding rod (4).

3. Arrangement according to claim 1, **characterised in that** the sliding seat arranged in the ceiling bearing (6) or floor bearing (5) is configured as a profiled hub (10), which corresponds with an upper or lower end of the holding rod (4) configured so as to be correspondingly cross sectionally identical, as a profiled shaft (7).

4. Arrangement according to any one of claims 1 to 3, **characterised in that** the profiled shaft (7) and profiled hub (10) have the cross section of a polygon.

5. Arrangement according to any one of claims 1 to 3, **characterised in that** the profiled shaft (7) and profiled hub (10) have the cross section of a rectangle.

6. Arrangement according to any one of claims 1 to 3, **characterised in that** the profiled shaft (7) and profiled hub (10) have the cross section of a hexagon.

7. Arrangement according to any one of claims 1 to 3, **characterised in that** the profiled shaft (7) and profiled hub (10) have the cross section of a circle with at least one lateral flattened area or recess.

## Revendications

1. Dispositif pour monter en les bloquant en rotation des barres pour se tenir d'un système de barres pour se tenir, dans des transports en commun, la barre pour se tenir (4) étant fixée, bloquée en rotation, à l'aide d'un montage au sol (5) à son extrémité inférieure ou d'un montage au plafond (6) à son extrémité supérieure, **caractérisé en ce que** la barre pour se tenir (4) est montée, fixe en rotation et apte à être guidée verticalement, dans un montage au plafond (6) disposé dans la zone du plafond et équipé d'un assemblage coulissant par complémentarité de forme, si elle comporte à son extrémité supérieure un montage au sol (5) fixe en rotation, et dans un montage au sol (5) disposé dans la zone du sol et pourvu d'un assemblage coulissant par complémentarité de forme, si elle comporte un montage au plafond (6) fixe en rotation.

2. Dispositif selon la revendication 1, **caractérisé en ce que** l'assemblage coulissant prévu dans le montage au plafond (6) ou dans le montage au sol (5) est conçu comme un manchon d'un arbre profilé (7) correspondant à un moyeu profilé (10) qui a la même forme en section transversale et qui est introduit, fixe en rotation, dans l'extrémité supérieure ou inférieure de la barre (4).

3. Dispositif selon la revendication 1, **caractérisé en ce que** l'assemblage coulissant prévu dans le montage au plafond (6) ou dans le montage au sol (5) est conçu comme un moyeu profilé (10) correspondant à une extrémité supérieure ou inférieure de la barre (4) qui est elle-même conçue comme un arbre profilé (7) et qui a la même forme en section transversale.

4. Dispositif selon l'une des revendications 1 à 3, **caractérisé en ce que** l'arbre profilé (7) et le moyeu profilé (10) présentent une section transversale polygonale.

5. Dispositif selon l'une des revendications 1 à 3, **caractérisé en ce que** l'arbre profilé (7) et le moyeu profilé (10) présentent une section transversale rectangulaire.

6. Dispositif selon l'une des revendications 1 à 3, **caractérisé en ce que** l'arbre profilé (7) et le moyeu profilé (10) présentent une section transversale hexagonale.

7. Dispositif selon l'une des revendications 1 à 3, **caractérisé en ce que** l'arbre profilé (7) et le moyeu profilé (10) présentent une section transversale ronde avec au moins un aplatissement ou un creux latéral.
